# EUROPEAN PATENT APPLICATION

(11) **EP 1 359 674 A1**
(43) Date of publication of application: **05.11.2003**
(21) Application number: 02290898.2
(22) Date of filing: 10.04.2002
(51) Int. Cl.: H04B 1/28, H04B 1/40

(54) **Receiver comprising a demodulator for processing modulated digital data**

(71) Applicant: Mitsubishi Electric Information Technology Centre Europe, 35700 Rennes (FR)
(72) Inventor: Kountouris, Apostolos c/o Mitsubishi Electr.Inf.Te, 35700 Rennes (FR)
(74) Representative: Blot, Philippe Robert Emile

(57) **Abstract**

The receiver comprises a demodulator comprising a processing unit (22) adapted to implement a demodulation method defined by a sequence of processing steps. It includes a control unit (24) adapted to implement control tasks of said processing unit (22), said control unit (24) including :
- means (26) for providing at least two different sequences of processing steps, each sequence defining a processing method, to said processing unit (22);
- means (28) for selecting a selected demodulation method to be implemented by said processing unit (22);
- means (30) for modifying said demodulation method implemented by said processing unit (22), these means for modifying (30) being adapted for setting the sequence of the processing steps defining said selected demodulation method.

Application to a mobile phone.

## Description

The invention concerns a receiver comprising a demodulator for processing modulated digital data into demodulated digital data, said demodulator comprising a processing unit adapted to implement a demodulation method defined by a sequence of processing steps.

In known mobile communication transmission systems (e.g. GSM), several demodulation methods can be implemented by a receiver depending on the transmission conditions. The transmission conditions may vary due to mobility of the receiver. Depending on the channel which has to be demodulated, the demodulation mode and method which is better suited is implemented.

In known receivers, the different demodulation methods simultaneously exist and operate in parallel. Thus, hardware resources are allocated for each demodulation method. The technologies used in these receivers are essentially ASIC/VLSI implementations which are inherently parallel.

Due to the implementation used for the different demodulation methods, the design of the receiver is complicated and the hardware resources have to be high. In addition, the number of different demodulation methods which can be implemented is reduced.

The aim of the invention is to provide a receiver which is simple and can implement several demodulation methods that can be applied at different time.

Accordingly, the subject matter of the invention is a receiver comprising a demodulator for processing modulated digital data into demodulated digital data, said demodulator comprising a processing unit adapted to implement a demodulation method defined by a sequence of processing steps, characterized in that
it includes a control unit adapted to implement control tasks of said processing unit, said control unit including :
- means for providing at least two different sequences of processing steps, each sequence defining a processing method, to said processing unit ;
- means for selecting a selected demodulation method to be implemented by said processing unit;
- means for modifying said demodulation method implemented by said processing unit, these means for modifying being adapted for setting the sequence of the processing steps defining said selected demodulation method.

According to particular implementations, the receiver comprises one or more of the following features :
- said processing unit comprises a programmable processor and a processor memory storing a set of executable instructions corresponding to a sequence of processing steps, and
   said means for modifying said demodulation method implemented by said processing unit comprise means for loading a set of executable instructions corresponding to said sequence of processing steps defining said selected demodulation method into said processor memory ;
- said processing unit comprises a single programmable processor and said control unit is implemented by said single programmable processor ;
- said control unit comprises an additional processor different from said programmable processor of said processing unit for implementing said control tasks ;
- said processing unit includes a field programmable gate array arranged with a configuration corresponding to a sequence of processing steps, and
   said means for modifying said demodulation method implemented by said processing unit comprise means for setting a configuration of the field programmable gate array corresponding to said sequence of processing steps defining said selected demodulation method ;
- said processing unit comprises a single field programmable gate array and said control unit is implemented by said single field programmable gate array ;
- said control unit comprises an additional processor different from said field programmable gate array of said processing unit for implementing said control tasks ;
- said means for providing at least two different sequences of processing steps, each sequence defining a demodulation method, to said processing unit comprise a memory in which said at least two different sequences of processing steps, each defining a demodulation method are stored ;
- said means for providing at least two different sequences of processing steps, each sequence defining a demodulation method to said processing unit comprise means for downloading at least one sequence of processing steps, defining a demodulation method from a wireless special communication link;
- said means for downloading at least one sequence of processing steps are adapted to temporary store said or each downloaded sequence of processing steps into said memory ;
- said means for providing at least two different sequences of processing steps, each sequence defining a demodulation method, to said processing unit comprise a configuration table including for each demodulation method :
   - a status indicating whether the configuration is implemented by the processing unit;
   - a reference to a configuration data structure containing the sequence of the processing steps defining a demodulation method ;
- said means for selecting a selected demodulation method to be implemented comprise means for estimating transmission conditions of data received by the receiver and means for choosing said selected demodulation method to be implemented according to said estimated transmission conditions ;
- said means for selecting a selected demodulation method to be implemented comprise means for receiving a control command indicating said selected demodulation method to be implemented from a wireless special communication link ; and
- it includes another functional block among an equalizer or a syntonizer adapted to process input digital data into output digital data, said functional block comprising a processing unit adapted to implement a processing method defined by a sequence of processing steps, and in that it includes a control unit adapted to implement control tasks of said processing unit, said control unit including :
   . means for providing at least two different sequences of processing steps, each sequence defining a processing method, to said processing unit;
   . means for selecting a selected processing method to be implemented by said processing unit;
   . means for modifying said processing method implemented by said processing unit, these means for modifying being adapted for setting the sequence of the processing steps defining said selected processing method.

The invention will be better understood on reading the following description, given merely by way of example and whilst referring to the drawings, in which :
- fig. 1 is a functional view of a receiver according to the invention ;
- fig. 2 is a diagrammatic view of a first embodiment of a receiver according to the invention ;
- fig. 3 is a diagrammatic view of a variant of the first embodiment of the receiver of fig. 1 ;
- fig. 4 is a diagrammatic view of a second embodiment of a receiver according to the invention ;
- fig. 5 is a diagrammatic view of a variant of the second embodiment of the receiver of fig. 4 ;
- fig. 6 is a block diagram showing a high level view of the software architecture of a receiver according to the invention ;
- fig. 7 is a simplified message sequence chart of a generic reconfiguration scenario for a receiver according to the invention ;
- fig. 8 is a simplified message sequence chart disclosing the reconfiguration scenario of fig. 7 in more details ;
- fig. 9 is a simplified message sequence chart of a reconfiguration scenario for a receiver in which the configuration data are downloaded from a remote site ;
- fig. 10 is a schematic view of a data structure of a configuration store for a simple system implementation ;
- fig.11 is a simplified message sequence chart of a reconfiguration scenario of the simple system implementation ;
- fig. 12 is a dataflow diagram for the simple system implementation of fig. 11 ;
- fig. 13 is a system operation flowchart for the simple system implementation of fig. 11 and 12 ;
- fig. 14 is a schematic view of a data structure of a local configuration store for a variant system implementation ;
- fig. 15 is a system operation flowchart for the variant system implementation ;
- fig. 16 is a dataflow diagram of the variant system implementation of fig. 14-15 ; and
- fig. 17 is a schematic view of a data structure for a transfer schedule table.

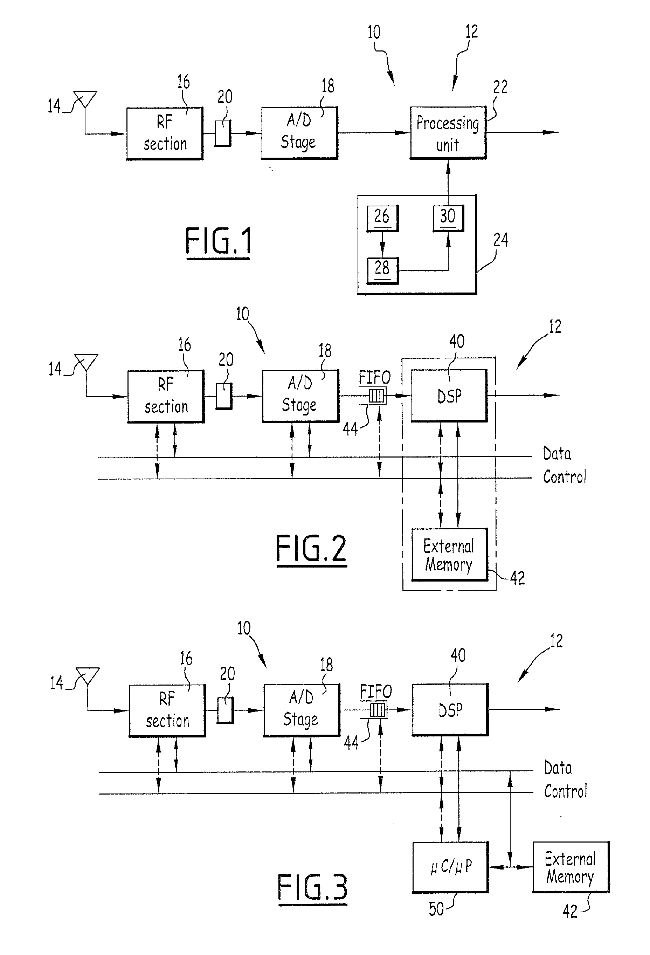

Referring to fig. 1 is a receiver 10 including a MSK/GMSK demodulator 12. The receiver 10 is assumed to be adapted to be used in a mobile communication transmission system like a GSM network. A receiver according to the invention could also be used in a satellite communication system.

The receiver 10 includes an antenna 14 adapted to receive a modulated analogue signal emitted by a base station of the GSM network. The antenna is electrically connected to a RF section 16.

The RF section 16 is adapted to deliver an IF or base band (zero IF) real analogue signal.

The output of the RF section 16 is connected to the input of an analogue/digital (A/D) conversion stage 18. An anti-aliasing filtering stage 20 is arranged before the A/D conversion stage 18.

The filtering stage 20 is either a low-pass or a band-pass filter according to the employed sampling schema for Nyquist sampling or band-pass sampling, respectively.

The demodulator 12 includes a processing unit 22 adapted to implement a demodulation method defined by a sequence of processing steps and a control unit 24 adapted to implement control tasks of said processing unit 22.

The processing unit 22 is adapted to implement a single demodulation method defined by a sequence of processing steps. The demodulation method implemented can be modified by the control unit 24.

The processing unit 22 includes either a programmable processor or a field programmable gate array, the configuration of which can be changed by the control unit.

The control unit 24 comprises means 26 for providing different sequences of processing steps to the processing unit. Each sequence defines a demodulation method.

The control unit 24 also comprises means 28 for selecting a demodulation method to be implemented by the processing unit 22 and means 30 for modifying the demodulation method implemented by the processing unit 22. These means 30 are adapted for setting the sequence of processing steps defining the selected demodulation method.

Means 26 for providing different sequences of processing steps are either a memory included in the receiver in which a predefined fixed set of demodulation methods is permanently stored or means for downloading software implementing demodulation methods from the network enabling thus selection from a larger set of demodulation methods.

The selecting means 28 are adapted to select an adapted demodulation method according to a criterion which is based on an analysis of the received signal or on the reception of a predetermined control command indicating the selected demodulation method to be implemented from a wireless special communication link.

Thus, a reconfigurable demodulator into a receiver is obtained. Since a single demodulation method is implemented at the same time, the demodulator uses a time-shared algorithm diversity approach.

Thanks to the reprogrammable or reconfigurable processing unit 22, the various demodulation methods are not used in parallel but they time-share the same hardware support of the processing unit 22 according to some selection/switch criterion. At each time, only one demodulation method operates on the received samples.

Several hardware architectures and organizations for a receiver will now be described with reference to fig. 2 - 5.

In the different embodiments, elements identical or similar are designated by the same reference numbers.

On fig. 2, the processing unit 22 and the control unit 24 are both implemented by a single programmable processor 40.

Advantageously, the processor 40 is a DSP Digital Signal Processor processor. The DSP processor is the only programmable component and thus is responsible for the execution of both signal processing and control tasks.

If the processor has not enough internal memory to store the executable code as well as the needed program data, an external memory 42 is provided.

A FIFO interface 44 is arranged between the A/D stage 18 and the DSP processor 40. The FIFO interface can be realized either by an ASIC or by some reconfigurable logic component like a FPGA.

With this arrangement, several sequences of processing steps, each corresponding to a demodulation method, are stored in the memory 42.

In the variant of fig. 3, an additional control processor 50, like a micro-controller, is used along with the DSP processor 40. The additional control processor 50 is responsible for control tasks consisting mainly on managing the processing unit 22 by changing the sequence of processing steps implemented by it when necessary. In particular, the control processor 50 issues a switch command to the DSP processor 40 and load a new software enabling the deployment of a new demodulation method.

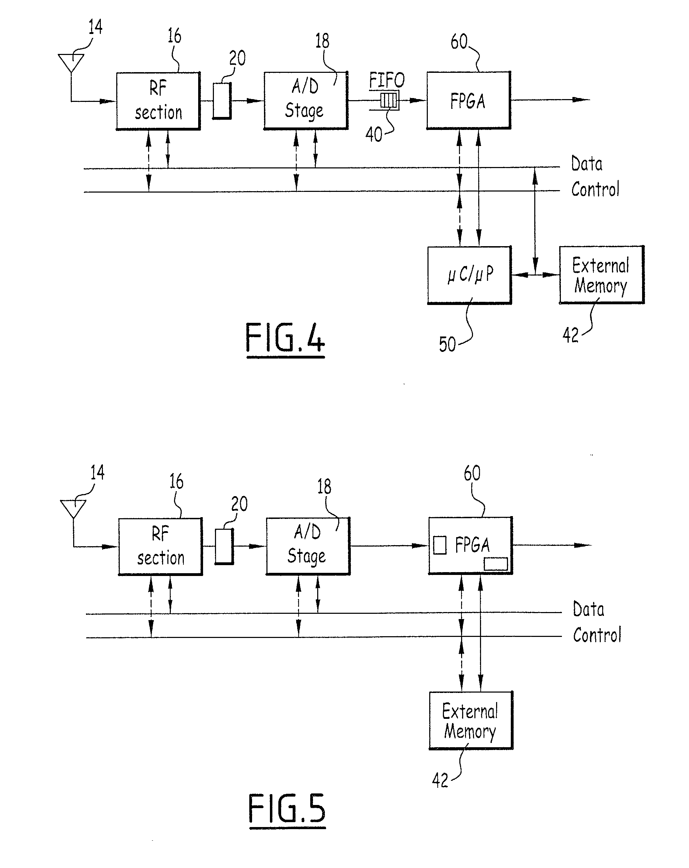

In the embodiment of fig. 4, the processing unit 22 consists in a reconfigurable hardware component like a field programmable gate array 60 (FPGA). This FPGA 60 is arranged with a configuration corresponding to a sequence of processing steps.

The FPGA reconfigurability plays the same role as the reprogrammability offered by stored program processors. The FPGA has mainly the responsibility of signal processing tasks. The FPGA is responsible for signal processing where distinct FPGA configuration bitstreams may instantiate different demodulation schemes. The system configuration management as well as the control of the reconfiguration process is under the responsibility of the control processor 50. The control processor is responsible for both setting the FPGA configuration as well as the parameter values of the hardwired sections.

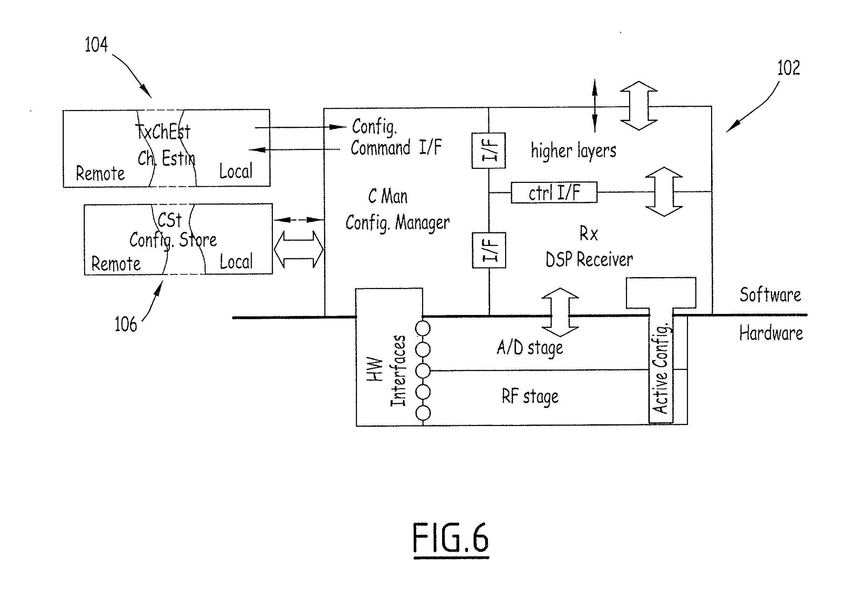

In the variant of fig. 5, the control tasks are implemented in the FPGA 60. Part of the FPGA is also used for the FIFO data interface to the A/D stage.

The software architecture appropriate for the present invention will now be described. The discussion uses the hardware architectures of fig. 2 and 3 as a target architecture reference.

At the software side of a communications receiver system, signal processing (SP) tasks, and system control (SC) tasks can be distinguished.

SP tasks form the receiver digital signal processing chain, while SC tasks handle system management issues including (re-)configuration management.

In the following description, the expression reconfiguration is used indifferently for reconfiguration or reprogramming. The expression configuration is used to identify a sequence of processing steps defining a particular demodulation method, whatever this method is implemented by a reconfigurable or a reprogrammable processor.

SP and SC tasks are concurrent. The architecture of fig. 3 may exploit this concurrency by executing SC and SP tasks on the micro-controller and DSP, respectively.

In the case of the hardware architecture of fig. 2, SC and SP tasks are sharing the same processor (i.e. the DSP processor) and so their execution is interleaved. This type of concurrency can be achieved either by employing some kind of RTOS (R/T Operating System) or without an RTOS by simply building in the software simple mechanisms to permit interleaved execution of the various tasks whenever this is appropriate.

An abstract system organization of the demodulator software is shown on fig. 6 in its most generic form.

The reconfigurable receiver/demodulator software consists mainly of the processing unit 22 that implements the SP tasks and the control unit 24 or configuration manager that is responsible for the static or dynamic configuration (and-reconfiguration) of the system.

Of importance are the control interfaces presented to the configuration manager by the software and hardware system components allowing the configuration manager to control their configuration related aspects. These entities can be considered as objects within the reconfigurable receiver system and their role is defined by the task/process they perform in the system.

The broader context of the reconfigurable receiver system is defined by the following elements :
. A reconfigurable Receiver (RRx) designated by 102 which constitutes the processing unit 22. It is responsible for the demodulation of the input signal samples and has the possibility to operate using a variety of demodulation algorithms (i.e. it is reconfigurable).
. A Channel Profile Estimator (TxChEst) designated by 104 which constitutes the selection means 28. It is responsible for classifying the transmission channel conditions and find a match between the current transmission conditions and the available receiver configurations ; the estimation process is based on appropriate out-of-band data provided by the receiver.
. A Configuration Store (CSt) designated by 106 which constitutes the providing means 26. It is a repository for the supported configurations by the receiver hardware. CSt corresponds to a configuration database.
. A Reconfiguration Process (RP) responsible for the effective deployment of a new receiver configuration and which is implemented by the control unit 24.

From a general standpoint depending on the type of the communication system (network or other), the channel profil estimator (TxChEst) and the configuration store (CSt) may be distributed entities in the sense that processing intelligence and the associated data may be distributed across several physical entities. In such a case, the local configuration store is designed by L-CSt and the remote configuration store is designated by R-CSt.

For instance this may be the case in a cellular network where terminal function depends on decisions taken at the network side. In this case, these distributed entities have a remote part and a local part with respect to the terminal equipment. The local part acts as a proxy (representative) of the remote part. When the terminal, as far as (re-)configuration is concerned, is completely independent, the remote part disappears meaning that all processing intelligence and the associated data are situated within the terminal and the decision making and deployment are performed locally.

At the software side, the Reconfigurable Receiver (RRx) 102 consists in a Receiver (Rx), a Configuration Manager (CMan) and a Local Configuration Store (L-CSt).

The configuration manager (CMan) is responsible for finding a match between the estimated channel profile and the receiver configurations available in the configuration store (CSt). Once this match is found, the appropriate configuration is deployed by means of a reconfiguration process (RP) controlled by CMan. This process sets the hardware parameters, sets the software parameters and performs the needed software updates in a specified order. It also guarantees consistent system operation during and after the reconfiguration process. The CMan is capable of controlling this process by means of well defined control interfaces (I/F) presented by each system component (hardware or software). The CMan is also responsible to initiate a transfer process to get the required data from the remote configuration store (R-CSt) if a configuration is not locally available in the L-CSt. In general, the RP consists of a combination of download - install - switch phases. The exact combination depends on the availability (local or not) of the required configurations as well as the specific deployment that may limit the system (re-)configuration capabilities.

How the configuration data are organized and details of the mechanisms that govern access to these data are described hereafter in more details.

The configuration store (CSt) 106 corresponds to the configuration database. It defines how configurations are stored, where configurations are stored, and how the configuration data are accessed.

The CSt is organized as a multi-level cache (i.e. a configuration cache). Three levels are defined.

A 1-st level (L-CSt1) corresponds to configurations stored in an execution memory, i.e. in the processor internal memory. These configurations are pre-installed and ready for execution after some initialisation. Switching between such configurations is carried out only by diffusing parameter values to the concerned components and resolving pointer references of software component functions.

A 2-nd level (L-CSt2) corresponds to configurations stored in a secondary memory, i.e. the processor external memory. Switching to these configurations is carried out by first bringing the configuration data into execution memory (the 1-st level) using some data transfer mechanism (e.g. background DMA). The transferred data replaces some other 1-st level configuration. Switching then continues as previously described.

A 3-rd level (R-CSt) corresponds to configurations stored at some remote site. Such configurations can be transferred either directly to the L-CSt1 if a reconfiguration was requested or to L-CSt2 if only an update of the locally stored configurations is requested. This transfer is carried out by the establishment of a special wireless communication link based on some transfer protocol that guarantees error-free data delivery.

The configurations in L-CSt1, L-CSt2 and R-CSt correspond to the system supported configurations. In order to track the configuration placement within the cache, some bookkeeping is implemented relating to the database organization. This bookkeeping can be efficiently realized by serial tables or other random access data structures indexed by the configuration identifier.

The system dynamic nature mainly due to the reconfiguration process is covered in detail in the following passages. To facilitate the description, reconfiguration scenarios will be described by means of simplified message sequence charts (MSC). A message sequence chart shows the messages exchanged between the implicated system entities/objects and how the process evolves in a relative time scale.

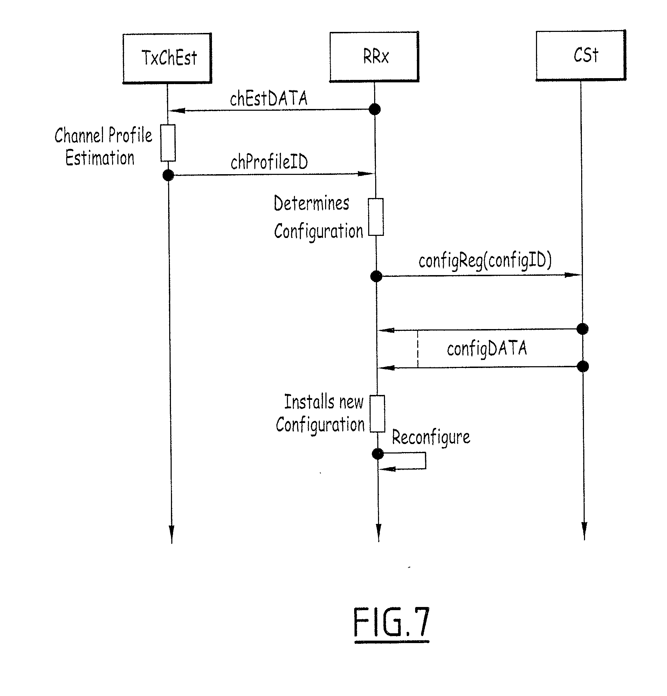

On fig. 7, the three main objects (TxChEst, RRx, CSt) of the Reconfigurable Receiver system are shown. Based on data (ChEstDATA) provided by RRx, TxChEst carries out an estimation of the channel profile and determines the transmission channel profile (chProfiledlD) which is communicated to RRx. The transmission channel profiles are mutually recognized by TxChEst and RRx. The RRx determines the most appropriate system configuration and requests it to the CSt by sending a configuration request (configReq(configlD)). System configurations are represented by mutually understood configuration identifiers (configlD).

The CSt provides the requested configuration data (configDATA) by means of a set of messages containing the information. The information are a set of instructions which corresponds to the demodulation method and which can be implemented by RRx. The RRx installs the configuration data to the appropriate places in the system and reconfigures the implicated system components. At this point the reconfiguration is complete and the RRx continues its normal operation under a new configuration.

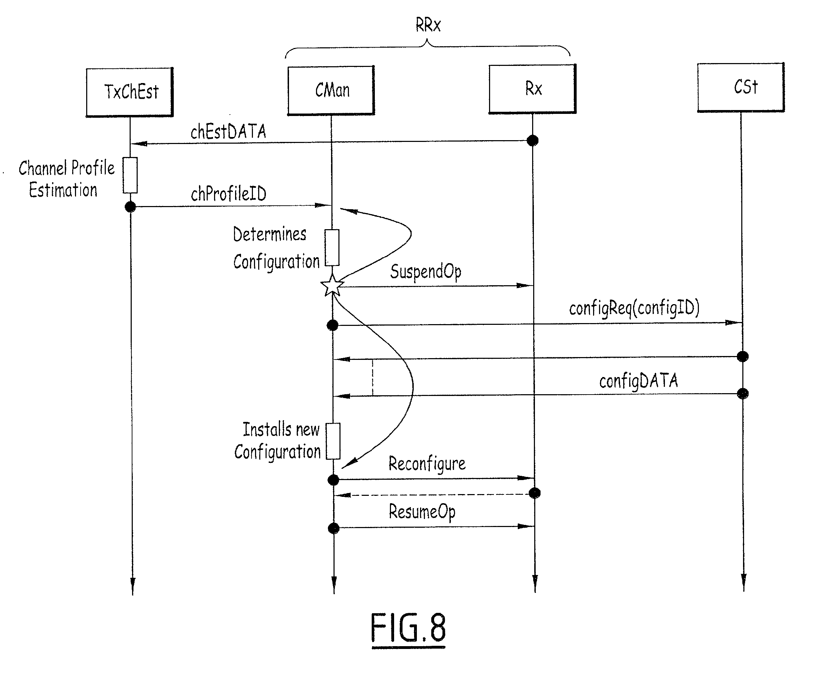

Fig. 8 gives more details on what happens inside the RRx during the reconfiguration. The RRx consists mainly of the CMan which is responsible of the reconfiguration process inside the reconfigurable receiver system and the Rx which is responsible of the digital signal processing tasks. In a sense Rx is responsible for the normal receiver operation.

Once the CMan determines that a new configuration is required (i.e. the channel profile has changed) and which is the new configuration, it suspends the Rx by sending a SuspendOp command and requests the needed configuration to CSt (configReq(configlD)). When the raw configuration data (configDATA) has become available to CMan, it is parsed and installed in the system memory area or areas designated to hold the replacement configuration.

From there, the CMan diffuses configDATA to the appropriate places in the system (e.g. code & data memory locations, hardware registers etc.) and reconfigures the implicated system components using the components' control interfaces. Rx is asked to reconfigure by the CMan calling its reconfigure function (Reconfigure). This diffusion transforms the replacement configuration into the active system configuration. After this step is completed, the CMan sends a ResumeOp command to the Rx and thus signals the Rx to resume its normal operation (i.e. receive/demodulate input samples to generate the output information signal) under its new configuration.

Rx suspension is necessary because during the rest of the process a consistent system configuration that would permit to continue operation is not guaranteed.

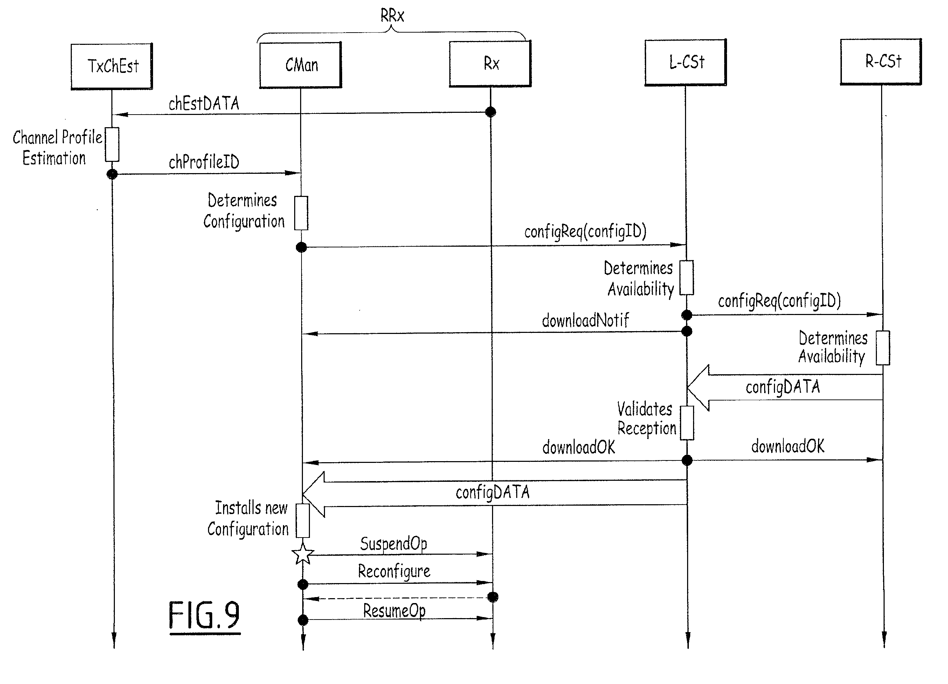

The scenario in fig. 9 gives further details on how the abstract system organization supports the case where reconfiguration requires first the configuration data to be downloaded into the local configuration store (L-CSt) of reconfigurable receiver from a remote site (R-CSt).

In this scenario, the CMan requests a configuration to the L-CSt by sending a configReq(configlD). The configlD serves to query the L-CSt database to determine the availability of the requested configuration. Though valid, the requested configuration is not locally available and so the configuration request (configReq(configlD)) is forwarded to R-CSt and the CMan is notified about this with downloadNotif.

Upon reception of the forwarded configuration request, R-CSt determines both its validity and its availability and the configuration data are sent over into one or more configuration data messages (configDATA). Once the data transfer is completed, L-CSt verifies and then acknowledges the good reception with a downloadOK message sent both to R-CSt and CMan. In L-CSt updates its database and sends the configDATA to Cman. Next the reconfiguration process continues as previously described on fig. 6.

The switching policy can be either local or distributed, i.e. across multiple network entities. The presented abstractions for the system organization and the reconfiguration process support both types and with the appropriate implementation assumptions are adequate to describe both schemes.

In the local scheme the receiver is completely independent. TxChEst is part of the terminal software. Hence the receiver based on its own channel estimation decides independently to switch from one demodulation mode to another.

In the distributed scheme, that may apply to a mobile communications network, the receiver receives the command switch from the network (e.g. via the BTS). The network is responsible for transmission conditions characterization. TxChEst is a process execution on a network equipment. The network sends the control command (chProfilelD) to the remote receiver. The terminal understands such commands, and, upon reception, performs the switch. Furthermore in order for the network process to work, data collected by the receiver (chEstDATA) are communicated which means that a logical link is provided for circulating signaling information and data between the cooperating entities (ie : to form a close loop control system).

Two different implementations will now be described concerning first only two pre-installed configurations and then two pre-installed configurations and multiple externally stored configurations which can be downloaded.

In the following, it is assumed that the channel estimation process (TxChEst) is somehow implemented yielding a channel profile identifier (chProfilelD) used by the configuration manager (CMan) for the reconfiguration process (RP).

The architecture of the single DSP processor hardware organization of figure 2 is assumed to be used. The DSP 40 has its own internal memory used to store the software code and data that make up the executable image. This memory will be referred to as the execution memory.

Finally, it is assumed that the high-level structure of the digital signal processing chain does not change between configurations. This means that the interconnection of the various functional blocks making up each chain is the same.

What is changed is the implementation of each software component (functional block).

The first implementation supports two configurations which are for example one for a coherent and one for non-coherent demodulation. These two configurations are pre-installed in execution memory space which means that only L-CSt-1 is used. Switching is reduced in a binary choice meaning that all estimated channel profiles map to one or the other configuration.

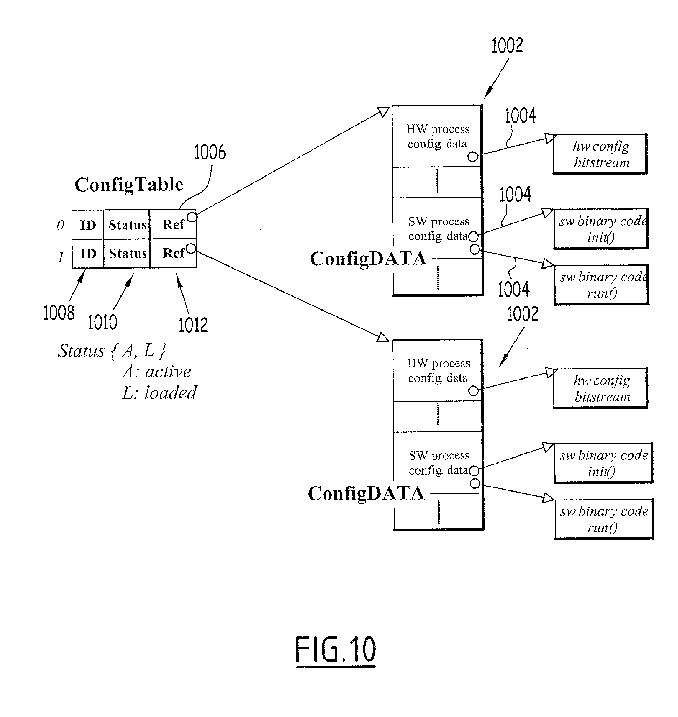

As shown on fig. 10, an installed configuration is represented by a data structure (configDATA) 1002 containing:
- the data values for each available parameter on each hardware component (i.e. RF, A/D stages),
- pointer references 1004 to the init and run functions of the various software components making up the digital signal processing chain and are supposed to be configurable.

A configuration table (ConfigTable) 1006 has an entry for each installed configuration. Each entry consists of:
- configlD designated by 1008 ConfigID and which can be equal to the table entry index ;
- status designated by 1010 and which indicates the configuration status (A: Active, L: Loaded) ; and
- configDATA_ref designated by 1012 and which is a reference to a configDATA structure.

The ConfigTable 1006 and the configDATA 1002 structures make up the system CSt object.

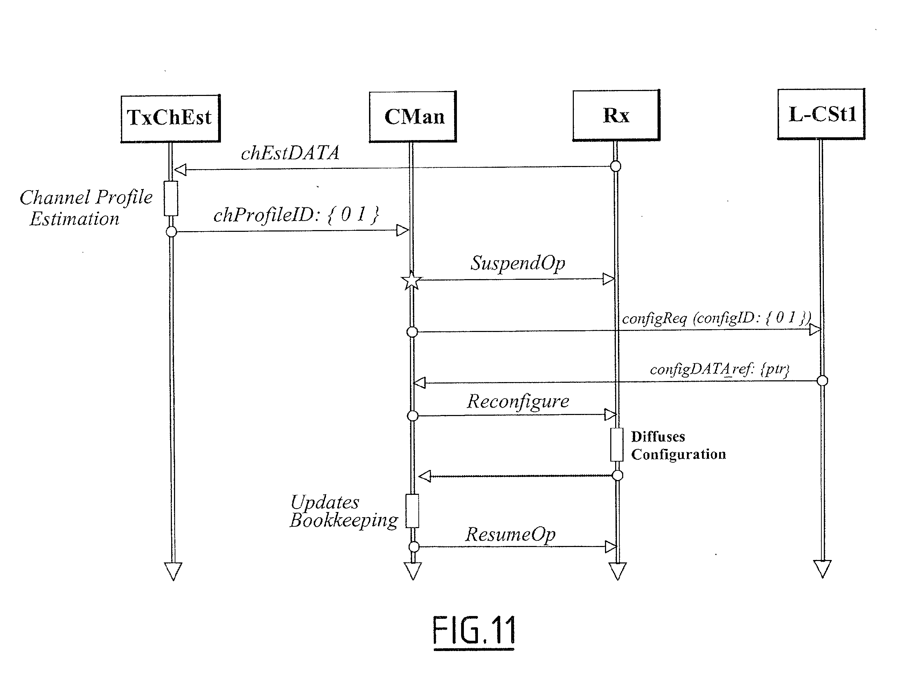

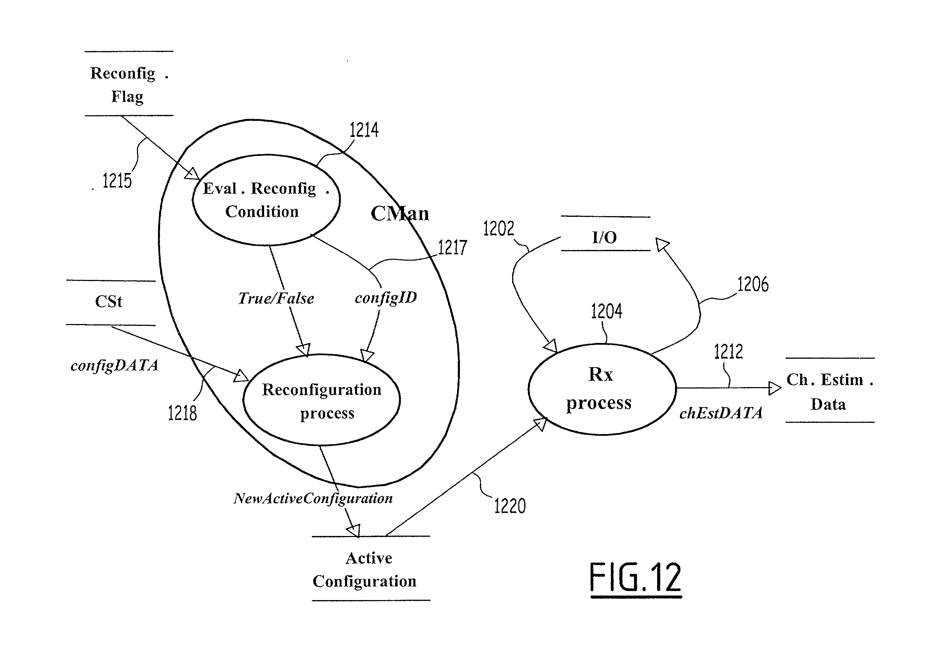

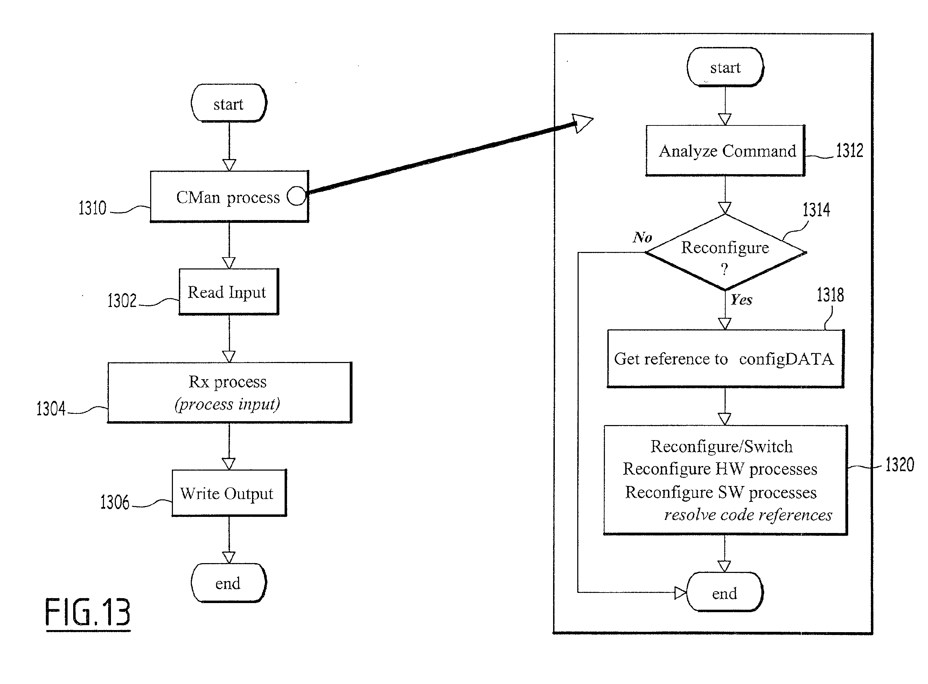

The reconfiguration/switch scenario is shown in fig. 11 and fig. 12 shows how the data circulate in the system. The system behavior implementing the reconfiguration scenario is shown in the flowchart of fig. 13.

The cyclic process of the software part of the RRx implemented on the DSP processor is shown on the left-hand side. It represents each iteration of the receiver infinite loop executed by Rx, each time a block of input samples (modulated symbol samples) is processed to produce a block of output samples (information bits). More precisely, an input sample is read at step 1302 (arrow 1202 on fig. 12) and the input sample is processed by Rx at step 1304 (1204 on fig. 12) in order to produce a demodulated sample according to the demodulation method implemented by Rx. The demodulated sample is outputted at step 1306 (arrow 1206 on fig. 12).

At the beginning of each iteration, the CMan process is executed at step 1310. Its details are shown in the right-hand side flowchart in fig. 13. The CMan processing is elementary. At step 1312, ChEstData (arrow 1212 on fig. 12) are sent to TxChEst for estimating channel profile and CMan determines whether a reconfiguration is necessary at step 1314 (1214 on fig. 12) according to a reconfiguration flag (arrow 1215 on fig. 12).

In the case that no reconfiguration is required, the CMan overhead consists simply in the evaluation of the reconfiguration condition. So the R/T operation of the Rx is not disrupted.

If reconfiguration is required, the length of the incurred overhead delay mainly depends on how fast the interfaces to the hardware stages are. Disruption of R/T depends on the amount of *slack* time which is defined as the difference between the time an input block becomes available and the time processing of the previous block is completed.

The configlD is received by reconfiguration process of the CMan from the TxChEst (arrow 1217 on fig. 12). The configDATA are requested by the CMan to CSt at step 1318. The configDATA are returned to the CMan according to arrow 1218 on fig. 12.

After having received the configDATA, the reconfiguration process of the CMan is implemented at step 1320 to reconfigure Rx process according to a new active configuration (arrow 1220 on fig. 12).

More than two configurations can be implemented in the same receiver.

The second implementation alternative builds upon and extends this simple implementation scheme in order to increase the system reconfiguration flexibility while keeping overhead low.

The second implementation supports two pre-installed configurations (e.g. one for a coherent and one for non-coherent demodulation) residing in the system execution memory. One of these two configurations is fixed, while the other is subject to modification by dynamic (run-time or static) system reconfiguration.

The fixed pre-installed configuration is called the primary configuration and the other pre-installed modifiable configuration is called the secondary configuration. The system disposes of other alternative configurations stored in secondary external memory.

When a system reconfiguration is needed two cases may arise : the first consists in simply switching between primary and secondary configurations ; the second case consists in first modifying the secondary configuration by bringing in and installing into execution memory a configuration stored in external memory and then switching from the primary to the new secondary configuration.

The first reconfiguration case is almost identical to the one supported by the first system embodiment previously described. In the second implementation, the three-level generic configuration cache scheme for the CSt entity reduces to the first two levels implementing entirely the L-CSt1/2 (local configuration store 1-st and 2-nd levels); the third level corresponding to R-CSt comes as an extension.

The fixed primary configuration is accessible via primConfiglD and similarly the secondary configuration is accessible via secConfiglD.

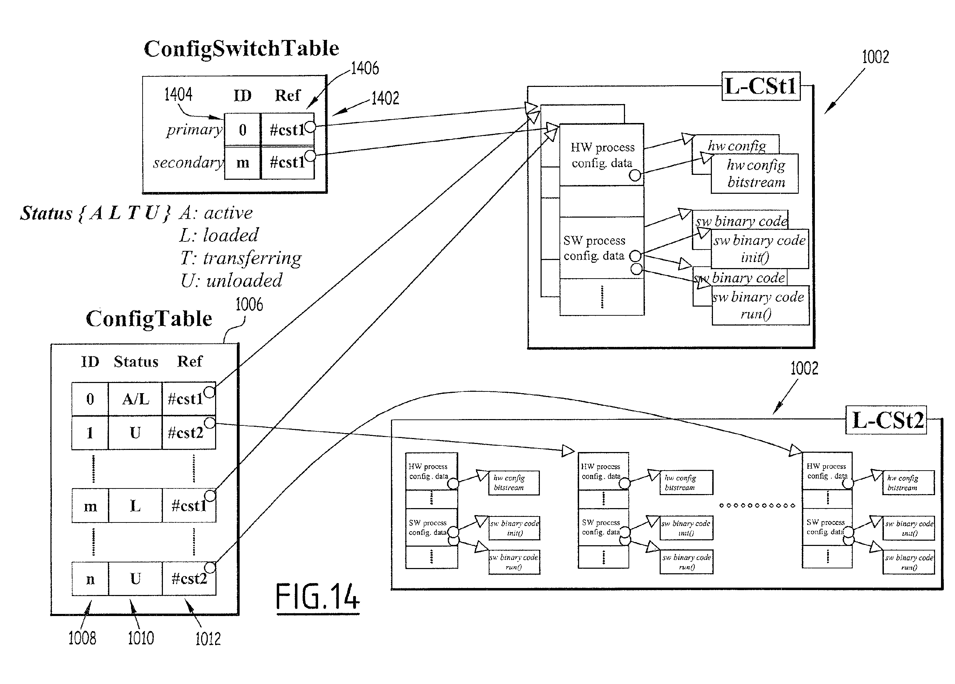

Fig. 14 graphically depicts the details for this extended scheme which is an extended form of the scheme presented in fig. 10.

A ConfigSwitchTable 1402 is defined for the internal bookkeeping. This table 1402 has two entries one for the primary configuration and one for the secondary. By convention the first table entry (table index 0) corresponds to the primary. Each entry in ConfigSwitchTable 1402 has two fields :
- a configuration identifier (configlD) of the referenced configuration designated by 1404
   - primConfiglD = ConfigSwitchTable [0].ID,
   - secConfiglD = ConfigSwitchTable [1].ID
- reference to the structure containing the configuration data (configDATA_ref) designated by 1406.

The ConfigTable 1006 contains an entry for each supported configuration ; both configurations installed in execution memory and those stored in external memory. The configuration identifier (configlD) 1008 is the index key to access the configuration entry and eventually the configuration data. In a simple implementation the ConfigTable is implemented as a serial table and the configlD is used to index the ConfigTable. However a hash table or a doubly linked list may be used for more flexible storage and update. Apart from the configlD, each ConfigTable entry consists also of the following fields :
- Status 1010 : corresponding to the configuration state; possible values correspond to Active, Loaded, Transferring, Unloaded
   - Active means that the configuration is the one currently specifying the system operation ;
   - Loaded means that the configuration is installed in execution memory ;
   - Transferring means that the configuration data is being transferred from external to execution memory and eventually the corresponding configuration will become Loaded ;
   - Unloaded means that the configuration data is stored in external memory ;
- Reference 1012 : to where the corresponding configuration record is stored (either in execution memory or external memory).

The status 1010 of the primary configuration can be either Active or Loaded. The reference 1012 is a pointer to the configDATA structure from where the actual configuration data can be accessed. References to Active or Loaded configurations point to execution memory (L-CSt1) and references to Transferring or *Unloaded* configurations point to external memory (L-CSt2).

As for the previous implementation the configDATA structures 1002 contain either the values for the configuration parameters or references to memory regions containing the actual data (e.g. the binary code for the init and run functions of a specific component).

The ConfigSwitchTable 1402 permits to efficiently access the configuration data of a loaded configuration and diffuse it in the system in order to switch between primary and secondary configurations. The ConfigTable 1006 allows for efficient decision of whether a configuration is supported in order to check the validity of reconfiguration requests. It also allows to know which is the active configuration, which configurations are loaded and whether reconfiguring to a supported configuration requires a data transfer before installation and switch. If the contents of L-CSt2 are modified (e.g. for system configuration upgrades or addition of new configurations), the ConfigTable has to be updated as well.

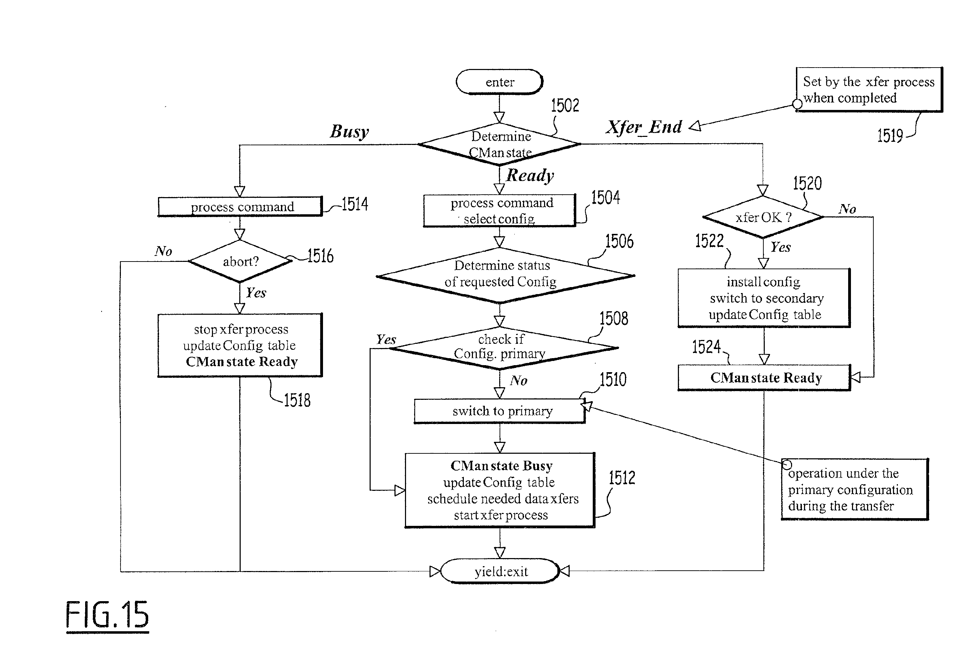

The operation of the CMan which is responsible for the control of the reconfiguration process is illustrated by the flowchart of fig. 15.

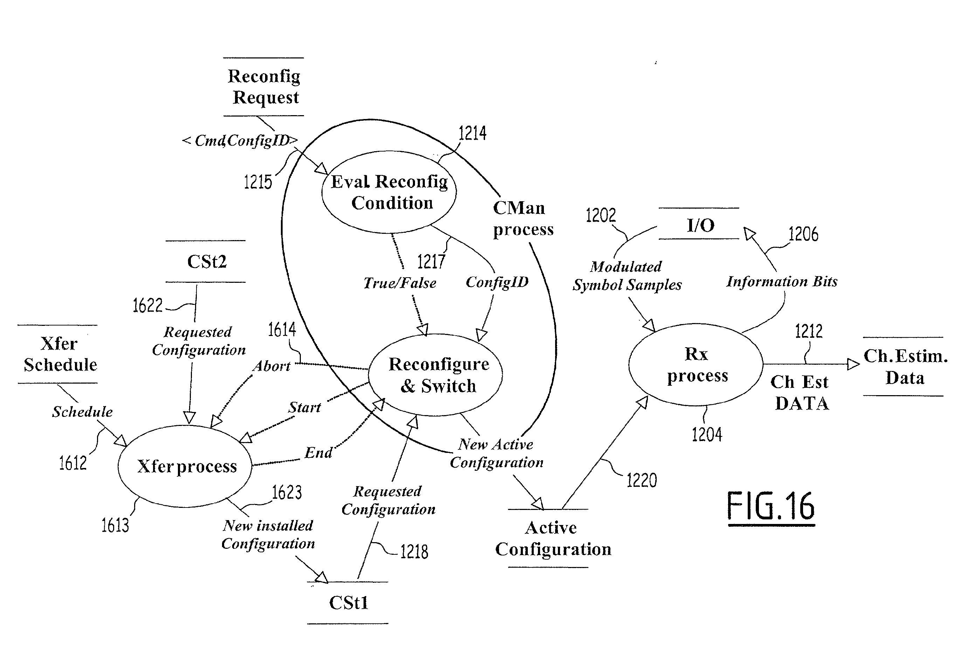

The system dataflow diagram shown in fig. 16 completes the picture and helps to better understand how the information flows, relating both to the configuration management and the receiver signal processing function, are handled. The dataflows which are identical or similar to those of fig. 12 are designated by the same reference numbers.

Whenever is the turn of the CMan process to execute, it starts by determining its current state at step 1502. This can be Ready, Busy or Xfer_End. The last two states relate to the data transfer process responsible for transferring configuration data from L-CSt2 into L-CSt1. Since the transfer process is a background (and thus concurrent) process, the CMan may get the chance to run many times before the transfer is complete and so keeping a CMan state is the effective means to know how to react to configuration commands processed by CMan.

If the CMan is in the Ready state and a reconfiguration request is received at step 1504 (request: <command: reconfigure, configuration: configID>, arrow 1215 on fig. 16), it is first checked at step 1506 if the requested configuration is supported by querying the ConfigTable to see if an entry exists for the requested configlD.

If the requested configuration is supported, its status is determined ; if active no further action is needed (i.e. the configuration request is redundant); if loaded it means that the configuration is either the primary or the secondary and so from one hand no update data transfer is needed to bring data from L-CSt2 into L-CSt1 and from the other hand a switch can be performed immediately between the primary and secondary configurations. Finally, if the configuration is unloaded the following steps are performed.

The system is first switched in the primary configuration at step 1510. If the system is already in it, then there is no switching. Internal state variables are updated accordingly.

The ConfigTable is next updated at step 1512 by passing the current secondary configuration into the Unloaded state and the new secondary configuration into the Transferring state. A transfer schedule is established at step 1512 (arrow 1612 on fig. 16) indicating the number of transfers as well as source and destination addresses in the system memory space ; the Xfer process 1613 is started. Finally, the CMan state is updated to Busy.

While in the Busy state the only valid command that the CMan can process is the abort command at step 1514 (arrow 1614 on fig. 16) ; if such a command is received (i.e. due to some system error or exception) (step 1516) the transfer process is stopped at step 1518 and the ConfigTable is updated by setting the status of the new secondary configuration to Unloaded. Since the old secondary configuration data may be corrupted the system remains into its primary configuration and the CMan state is updated to Ready. At this point the system has only one valid configuration, i.e. the primary.

Finally, once an initiated data transfer process ends by means of some interrupt processing or polling mechanism, the CMan state is updated to Xfer_End at step 1519. When the turn of the CMan process comes to run this event is detected at step 1520 and appropriate actions are taken.

At step 1522, the configurations data are installed in L-CSt1 (arrows 1522, 1523 on fig. 16), the state of the new secondary configuration are updated in ConfigTable to Loaded and the ConfigSwitchTable are updated to account for the new secondary configuration.

At the same step, a switch from the primary to secondary configuration is carried out by diffusing the configuration settings to the concerned system processes (hardware and software). The states of the primary and secondary configurations are updated accordingly in ConfigTable.

At step 1524, the CMan state is set to Ready.

During the transfer process, normal system operation may continue by using the primary configuration which is fixed. Furthermore if there is a problem and the reconfiguration process has to be aborted, the system will always be able to operate in its primary configuration. In addition it is worth noting that the CMan process can be easily extended to process other commands like for instance update the secondary configuration without switching.

The point that needs further explanation concerns the background data transfer process (Xfer process, 1613) that is responsible for transferring a configuration from L-CSt2 into L-CSt1. If a requested configuration is supported but it is not present, it has to be *paged-in* into execution memory (L-CSt1) from the external memory (L-CSt2) to replace the secondary configuration. In processors used in embedded systems the transfer process is advantageously handled by DMA (Direct Memory Access) hardware. DMA transfers may run concurrently with software execution on the processor and so the Xfer process based on DMA may effectively be a background process. With lower priority, the DMA transfer slightly interferes with other software processes running in parallel on the processor. Finally, the DMA hardware is usually connected to the processor interrupts and so the DMA process may *notify* via interrupts the processor about its progress (e.g. completion).

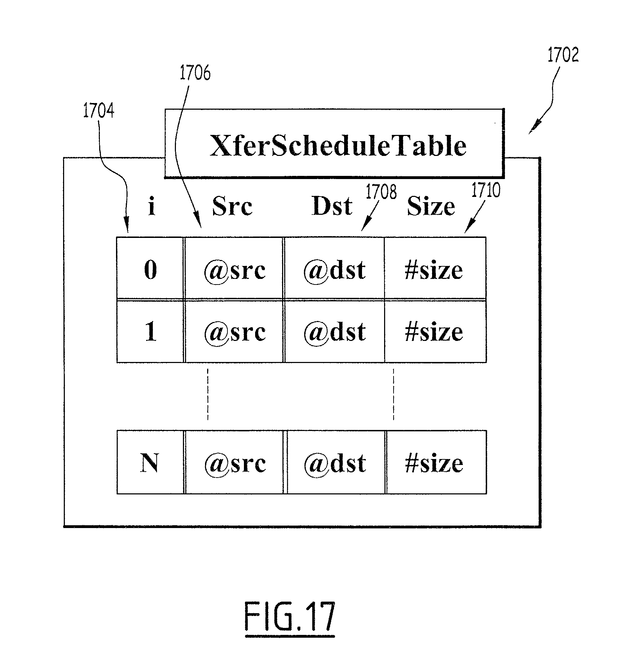

The Xfer process is started by CMan. Given that the configuration data may not be stored in a contiguous external memory space a full transfer may necessitate successively programming the DMA controller for several sub-transfers. Similarly several sub-transfers may be needed because bringing a configuration into execution memory may necessitate storing different portions of the configuration data into several places in memory. To handle this complexity a data structure called the XferScheduleTable 1702, shown in fig. 17 is used. Each configuration transfer is associated to an XferScheduleTable. Each sub-transfer has a table entry consisting:
- a transfer sequence number (i) designated by 1704 indexing the table and corresponds to the order of transfers,
- a source address (@src) designated by 1706 which is a reference to external memory,
- a destination address (@dst) designated by 1708 which is a reference to execution memory,
- a *size* in bytes designated by 1710.

It is assumed that the source and destination addresses are a priori known and that enough free memory exists at the destination to avoid overwriting into other memory regions not destined to received configuration data. The Xfer (DMA) process uses the XferScheduleTable to dynamically configure itself for each sub-transfer. Looping through the table from lower to higher indexes the DMA controller can appropriately configured. Each time a sub-transfer ends, indicated by a DMA_End interrupt the DMA is reconfigured using the next table entry. If the last entry is reached the interrupt process sets the CMan state into Xfer_End state.

The advantages of the proposed implementation are manifold. The first is that the reconfiguration delay can be kept low in the case that reconfiguration does not require updating the execution memory with configuration data stored in external memory. Furthermore even if this is required having the update process executing as a background process permits the system to continue its normal operation under the primary configuration while the configuration data is updated. In addition having a fixed primary configuration permits to guarantee system operation in cases that there is a problem with the reconfiguration process; this corresponds to a very basic fault tolerance policy and mechanism by allowing to easily roll-back to a stable system configuration. Another advantage comes from the increase in system flexibility with low demands on execution memory size. Though there are higher demands for external memory this comes at a lower cost given that execution memory is usually processor on-chip memory which is from one hand limited and from the other hand more expensive.

The described implementation can be easily extended to support download of remotely stored configurations. Such an extension fully implements the 3-level configuration cache scheme with the 3-rd level corresponding to R-CSt of the abstract reconfiguration scheme described in fig. 9. However for such extensions a more elaborate download protocol may need to be supported and a logical/physical communication channel needs to be defined in detail to support the circulation of signaling information and configuration data between the remote entities.

The invention has been disclosed for the reconfiguration of a demodulator in a receiver. This invention can be used for any functional block of a receiver which can be reconfigure like an equalizer or a syntonizer.

## Claims

1. Receiver comprising a demodulator for processing modulated digital data into demodulated digital data, said demodulator comprising a processing unit (22) adapted to implement a demodulation method defined by a sequence of processing steps,
**characterized in that**
it includes a control unit (24) adapted to implement control tasks of said processing unit (22), said control unit (24) including :
- means (26) for providing at least two different sequences of processing steps, each sequence defining a processing method, to said processing unit (22);
- means (28) for selecting a selected demodulation method to be implemented by said processing unit (22);
- means (30) for modifying said demodulation method implemented by said processing unit (22), these means for modifying (30) being adapted for setting the sequence of the processing steps defining said selected demodulation method.

2. Receiver according to claim 1, **characterized in that** said processing unit (22) comprises a programmable processor (40) and a processor memory (42) storing a set of executable instructions corresponding to a sequence of processing steps, and
said means (30) for modifying said demodulation method implemented by said processing unit (22) comprise means (40, 50) for loading a set of executable instructions corresponding to said sequence of processing steps defining said selected demodulation method into said processor memory (42).

3. Receiver according to claim 2, **characterized in that** said processing unit (22) comprises a single programmable processor (40) and said control unit (24) is implemented by said single programmable processor (40).

4. Receiver according to claim 2, **characterized in that** said control unit (24) comprises an additional processor (50) different from said programmable processor (40) of said processing unit (22) for implementing said control tasks.

5. Receiver according to claim 1, **characterized in that** said processing unit (22) includes a field programmable gate array (60) arranged with a configuration corresponding to a sequence of processing steps, and
said means (30) for modifying said demodulation method implemented by said processing unit (22) comprise means (50, 60) for setting a configuration of the field programmable gate array (60) corresponding to said sequence of processing steps defining said selected demodulation method.

6. Receiver according to claim 5, **characterized in that** said processing unit (22) comprises a single field programmable gate array (60) and said control unit (24) is implemented by said single field programmable gate array (60).

7. Receiver according to claim 5, **characterized in that** said control unit (24) comprises an additional processor (50) different from said field programmable gate array (60) of said processing unit (22) for implementing said control tasks.

8. Receiver according to any one of the preceding claims, **characterized in that** said means (26) for providing at least two different sequences of processing steps, each sequence defining a demodulation method, to said processing unit (22) comprise a memory (42, L-Cst2) in which said at least two different sequences of processing steps, each defining a demodulation method are stored.

9. Receiver according to any one of claims 1-8, **characterized in that** said means (26) for providing at least two different sequences of processing steps, each sequence defining a demodulation method to said processing unit (22) comprise means (1622) for downloading at least one sequence of processing steps, defining a demodulation method from a wireless special communication link.

10. Receiver according to claims 8 and 9, **characterized that** said means (1622) for downloading at least one sequence of processing steps are adapted to temporary store said or each downloaded sequence of processing steps into said memory (42, L-Cst2).

11. Receiver according to any one of the preceding claims, **characterized in that** said means (26) for providing at least two different sequences of processing steps, each sequence defining a demodulation method, to said processing unit (22) comprise a configuration table (1006) including for each demodulation method :
- a status (1010) indicating whether the configuration is implemented by the processing unit (22);
- a reference (1012) to a configuration data structure containing the sequence of the processing steps defining a demodulation method.

12. Receiver according to any one of the proceeding claims, **characterized in that** said means (28) for selecting a selected demodulation method to be implemented comprise means (1274) for estimating transmission conditions of data received by the receiver and means for choosing said selected demodulation method to be implemented according to said estimated transmission conditions.

13. Receiver according to any one of claims 1-12, **characterized in that** said means (26) for selecting a selected demodulation method to be implemented comprise means for receiving a control command indicating said selected demodulation method to be implemented from a wireless special communication link.

14. Receiver according to any one of the preceding claims, **characterized in that** it includes another functional block among an equalizer or a syntonizer adapted to process input digital data into output digital data, said functional block comprising a processing unit adapted to implement a processing method defined by a sequence of processing steps, and **in that** it includes a control unit adapted to implement control tasks of said processing unit, said control unit including :
- means for providing at least two different sequences of processing steps, each sequence defining a processing method, to said processing unit;
- means for selecting a selected processing method to be implemented by said processing unit;
- means for modifying said processing method implemented by said processing unit, these means for modifying being adapted for setting the sequence of the processing steps defining said selected processing method.
